# FASCICULE DE BREVET EUROPEEN

(11) **EP 2 735 226 B1**
(45) Date de publication et mention de la délivrance du brevet: **10.05.2017**
(21) Numéro de dépôt: 13193647.8
(22) Date de dépôt: 20.11.2013
(51) Int. Cl.: A01K 5/00, B65G 23/44

(54) **Mélangeuse agricole**
Landwirtschaftlicher Mischwagen
Agricultural mixing machine

(30) Priorité: 21.11.2012 FR 1261084
(43) Date de publication de la demande: 28.05.2014
(73) Titulaire: Kuhn-Audureau S.A., 85260 La Copechagnière (FR)
(72) Inventeur: Lhomme, Benoît, 85140 CHAUCHE (FR); Berthelot, Emmanuel, 85290 Saint Laurent Sur Sevre (FR)
(74) Mandataire: Esch, Esther Evelyne

(56) Documents cités:
- EP-A2- 1 449 426
- WO-A2-2009/060442
- DE-A1- 4 413 321
- DE-A1-102010 033 888
- DE-U1-202004 007 874

## Description

La présente invention concerne une mélangeuse agricole comportant notamment une cuve de mélange et un bras de chargement, le bras de chargement portant une fraise de chargement de produits et un dispositif de déplacement des produits en direction de la cuve de mélange, le dispositif de déplacement comportant un rouleau antérieur disposé en aval et à proximité de la fraise de chargement, un rouleau postérieur disposé à proximité de la cuve de mélange et une bande transporteuse enroulée autour desdits rouleaux.

Une mélangeuse de ce type est connue du document WO 2009/060442 A2. Sur cette machine, la bande transporteuse est susceptible de s'allonger et de se détendre, passé un certain nombre d'heures de fonctionnement. Il en résulte un fonctionnement altéré du dispositif de déplacement ainsi qu'une dégradation de la longévité de la machine.

Pour remédier à cet inconvénient, il est par ailleurs connu dans l'état de la technique, des mélangeuses du type précité dont le bras de chargement porte un dispositif de tension de la bande transporteuse.

Sur une mélangeuse connue de ce genre, le rouleau postérieur est relié au bras de chargement au moyen d'un dispositif de liaison. Ce dispositif de liaison coopère avec le dispositif de tension en vue de déplacer ledit rouleau postérieur pour ajuster la tension de la bande transporteuse. A cette fin, le dispositif de liaison comporte, par exemple, une platine portant l'axe de rotation dudit rouleau, laquelle platine peut coulisser à l'intérieur d'un guide solidaire d'une paroi latérale du bras de chargement. Ce guide est orienté suivant une longueur dudit bras. Le dispositif de tension comporte une tige filetée dont une extrémité est reliée à ladite platine, et dont l'autre extrémité est vissée dans un support fixé sur la paroi latérale du bras de chargement. Par vissage/dévissage de cette autre extrémité dans son support, la tige filetée vient déplacer la platine dans son guide et ainsi modifier la tension de la bande transporteuse. Un tel dispositif de tension est purement manuel. Il ne permet pas d'amortir les surcharges, chocs et à-coups que la bande transporteuse peut subir pendant le fonctionnement. De telles contraintes mécaniques, en plus de réduire le confort d'utilisation de la mélangeuse, peuvent user prématurément la bande transporteuse ainsi que les rouleaux antérieur et postérieur et leurs moyens de montage en rotation respectifs sur le bras de chargement. Ces contraintes se produisent, par exemple, lorsque la bande transporteuse véhicule un paquet dense de végétaux, ou encore lorsque les végétaux saisis par la fraise de chargement présentent une densité irrégulière. De plus, le dispositif de tension purement manuel exige de fréquents réglages par l'utilisateur de la machine car la bande transporteuse s'use et se détend. Il est difficile pour l'utilisateur de savoir si la bande est tendue à une valeur optimale. De plus, la tige filetée, employée dans ce dispositif de tension, est sujette au grippage et aux salissures, ce qui complique son réglage. Au final, le réglage du dispositif de tension est une opération rebutante souvent négligée par l'utilisateur, au détriment du rendement et de la longévité de la machine.

Sur une autre mélangeuse connue, le dispositif de tension agit également par déplacement du rouleau postérieur. Il comporte à cet effet une tige filetée dont une extrémité est reliée à une platine portant l'axe de rotation dudit rouleau, et un ressort de compression traversé par la tige filetée. Le ressort prend appui sur un écrou de réglage vissé sur la tige filetée, et sur un support fixé à une paroi latérale du bras de chargement. L'effort exercé par le ressort assure automatiquement la tension de la bande transporteuse. Toutefois, le fonctionnement du ressort peut être perturbé par du fourrage qui vient se coincer entre ses spires. De plus, l'effort du ressort diminue avec son allongement, d'où une tension de bande qui diminue à mesure que la bande s'étire en fonctionnement. Il se peut donc qu'après un certain nombre d'heures de travail, la bande se mette à glisser sur le rouleau motorisé pour animer la bande. Pour éviter ce problème, l'utilisateur peut agir sur l'écrou de réglage de manière à augmenter la contrainte du ressort, mais le réglage de la tension reste approximatif. De plus, cette intervention manuelle fastidieuse est facilement négligée. Sur cette machine connue, pendant le travail, le bras de chargement est la plupart du temps abaissé pour que la fraise de chargement saisisse les produits regroupés, par exemple, dans un tunnel d'ensilage au sol. Le rouleau antérieur est alors situé plus bas que le rouleau postérieur localisé à proximité du bord supérieur de la cuve de mélange. Par conséquent, les produits déplacés par la bande transporteuse exercent sur cette dernière, de par leur poids propre, une composante d'effort orientée du rouleau postérieur vers le rouleau antérieur. Cette composante d'effort s'oppose à l'effort de tension généré par le ressort de compression agissant sur le rouleau postérieur, et réduit donc la tension de la bande. Lorsque la masse des produits à déplacer est importante, il se peut que l'effort du ressort de compression ne suffise pas à maintenir une tension correcte de la bande transporteuse, d'où la bande risque de glisser sur ses rouleaux et s'user prématurément.

La présente invention a pour but une mélangeuse agricole qui ne présente pas les inconvénients précités.

Ce but est atteint par une machine selon la revendication 1.

Le vérin du dispositif de tension autorise un réglage et un rattrapage automatiques de la tension de la bande transporteuse pendant le fonctionnement de la machine. Aucun réglage de la tension de la bande transporteuse par l'utilisateur n'est requis. Etant donné que le vérin agit sur le rouleau antérieur, et non pas sur le rouleau postérieur, l'effort de tension exercé par le vérin est orienté du rouleau postérieur vers le rouleau antérieur. Ainsi, la masse des produits déplacés ne vient pas réduire la tension de la bande transporteuse. Les risques de glissement de cette dernière sont donc réduits. Le débit de chantier et la longévité de la machine s'en trouvent améliorés. En sus, le fonctionnement d'un vérin est peu affecté par les salissures. Un circuit d'alimentation du vérin peut aisément être conçu de sorte que la pression dans le vérin soit constante et donc que l'effort développé par le vérin soit constant quel que soit son allongement. L'accumulateur relié au vérin permet à ce dernier de varier en longueur par suite d'une surcharge sur la bande transporteuse tendant à rapprocher les rouleaux antérieur et postérieur l'un de l'autre. Autrement dit, cette surcharge, au lieu d'être encaissée directement par la bande transporteuse, est pour l'essentiel absorbée par la variation de longueur du vérin permise par l'accumulateur. De plus, l'accumulateur amortit les chocs et à-coups que peut subir la bande transporteuse lorsqu'elle est animée, ce qui augmente la durée de vie de la machine, ainsi que son confort d'utilisation.

Selon une autre caractéristique avantageuse de l'invention, la bande transporteuse est mise en mouvement au moyen d'un moteur agissant sur le rouleau postérieur. Le brin supérieur de la bande, sur lequel les produits reposent, est donc tiré par le rouleau postérieur, ce qui contribue à maintenir la tension de la bande transporteuse.

D'autres caractéristiques et avantages de l'invention ressortiront de la description ci-après avec référence aux dessins annexés qui représentent un exemple non limitatif de réalisation de la machine selon l'invention.

Sur ces dessins :
- la figure 1 représente une vue en perspective d'une machine selon l'invention ;
- la figure 2 représente une autre vue en perspective de la machine de la figure 1 ;

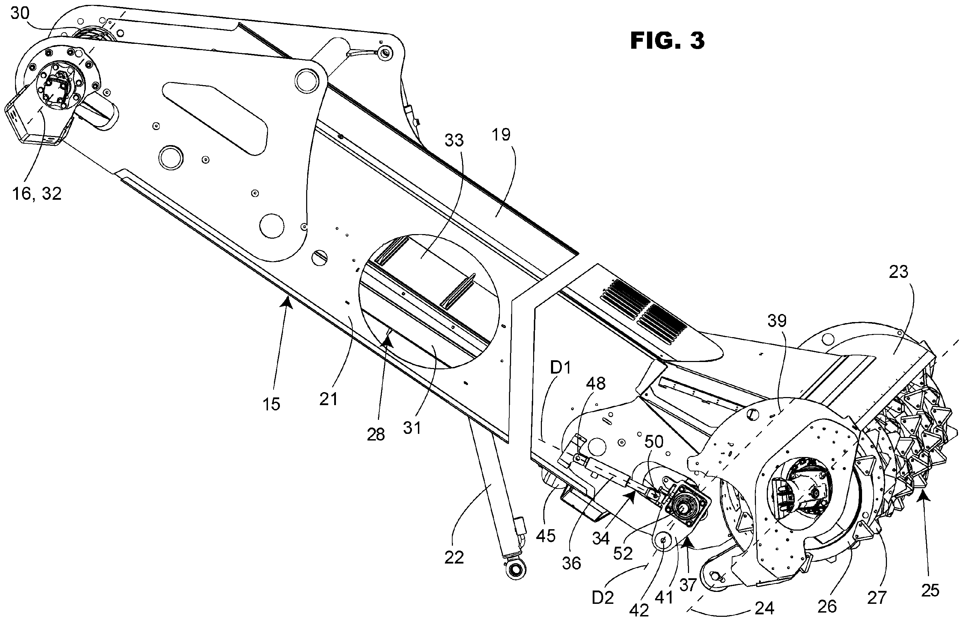

- la figure 3 représente une vue partielle en perspective du bras de chargement comportant un dispositif de tension selon l'invention ;
- la figure 4 représente une autre vue du bras de chargement de la figure 3.

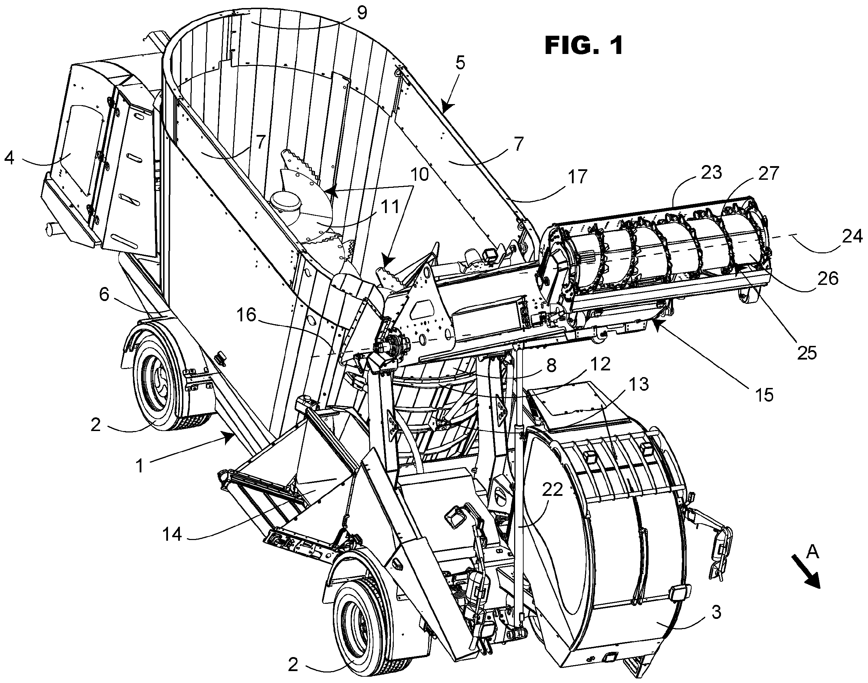

Telle qu'elle est représentée sur la figure 1, la machine selon l'invention est une mélangeuse automotrice pouvant être déplacée dans une direction d'avancement (A). Dans la description qui suit, les notions « l'avant », « l'arrière », « la gauche » et « la droite » sont définies en référence à cette direction d'avancement (A). La machine comporte un châssis (1) muni de roues (2) motrices à l'arrière et directrices à l'avant. Les roues (2) avant et arrière peuvent être toutes motrices et/ou directrices. A l'avant du châssis (1) est placée une cabine de pilotage (3) comportant un siège pour l'utilisateur ainsi qu'un volant de direction et les diverses commandes mécaniques, électriques ou hydrauliques des organes de travail de la machine. A l'arrière du châssis (1) est placée une unité d'entraînement (4). Celle-ci comporte un moteur thermique alimentant une centrale hydraulique pour l'entraînement et la commande des roues (2) et des différents organes de travail.

Sur le châssis (1) est montée une cuve de mélange (5) formée par un plancher (6), deux parois latérales (7), une paroi avant (8) et une paroi arrière (9) définissant un volume qui peut être rempli de produits d'alimentation pour le bétail. L'unité d'entraînement (4) est adossée à la paroi arrière (9). Dans le fond de la cuve de mélange (5) sont logés des moyens de déchiquetage et de mixage des produits. Ces moyens sont constitués par deux vis (10) verticales. Un nombre inférieur ou supérieur de vis, y compris de vis horizontales, peut aussi être envisagé. Ces vis (10) verticales sont montées dans des paliers du plancher (6) de la cuve de mélange (5) de manière à pouvoir tourner. Chaque vis (10) est munie de filets et/ou de pales (11). Ces filets et/ou pales (11) sont avantageusement équipés à leur périphérie de couteaux ou de pièces analogues qui assurent la coupe des produits lors de la rotation des vis (10). Le plancher (6) et/ou les parois (7, 8, 9) de la cuve de mélange (5) peuvent porter des contre-couteaux qui favorisent ladite coupe. Les deux vis (10) peuvent être entraînées en rotation à des vitesses modulables en fonction des opérations. Cet entraînement est assuré au moyen de moteurs hydrauliques situés sous le plancher (6) de la cuve de mélange (5).

La paroi avant (8) de la cuve de mélange (5) comporte un orifice (12) avec une trappe (13) coulissante orientée sensiblement verticalement. Cette trappe (13) est commandée au moyen d'un vérin hydraulique, par exemple, dont l'actionnement permet de faire varier l'ouverture de la trappe (13). Pendant le transport et pendant les opérations de chargement et de mixage des produits dans la cuve de mélange (5), la trappe (13) est maintenue fermée. Pour la distribution des produits, les vis (10) de mélange animées en rotation poussent les produits à travers l'orifice (12) dont la trappe (13) est plus ou moins ouverte afin d'ajuster le débit de passage des produits vers un tapis (14) disposé transversalement à l'avant de la cuve de mélange (5). Ce tapis (14) peut être actionné dans un sens ou dans l'autre afin de distribuer les produits du côté gauche ou du côté droit de la machine.

Le châssis (1) porte un bras de chargement (15). Celui-ci est articulé au châssis (1) au moyen d'un premier axe transversal (16). Celui-ci est disposé à proximité du bord supérieur (17) de la paroi avant (8) de la cuve de mélange (5). Le bras de chargement (15) comporte une paroi inférieure (18), une paroi supérieure (19), une paroi gauche (20) et une paroi droite (21) qui délimitent une sorte de tunnel pour le passage des produits. Un vérin (22) hydraulique articulé entre le châssis (1) et le bras de chargement (15) permet de pivoter celui-ci autour dudit premier axe transversal (16), de manière à positionner le bras de chargement (15) dans différentes positions de chargement des produits. A son extrémité avant, le bras de chargement (15) porte un carter (23) avec un deuxième axe transversal (24) portant une fraise de chargement (25). Celle-ci se présente sous la forme d'un rotor (26) avec des couteaux (27) qui sont de préférence disposés en spirale. La fraise de chargement (25) est partiellement enveloppée par le carter (23), et est animée autour dudit deuxième axe transversal (24) au moyen d'un moteur hydraulique intégré dans le corps du rotor (26). Pour le chargement des produits, le bras de chargement (15) est positionné, au moyen du vérin (22), à la hauteur adéquate pour que la fraise de chargement (25) en rotation vienne saisir les produits tels que de l'ensilage, du foin, de l'enrubanné ou de la paille présents au sol. Les couteaux (27) de la fraise (25) arrachent une certaine quantité de produits et les déplacent latéralement et vers l'arrière à l'intérieur du carter (23), en direction d'un dispositif de déplacement (28) des produits logé à l'intérieur du bras de chargement (15). Ce dispositif de déplacement (28) convoie ensuite les produits en direction de la cuve de mélange (5). A cet effet, le dispositif de déplacement (28) comporte un rouleau antérieur (29) disposé en aval dans le sens de déplacement des produits, et à proximité de la fraise de chargement (25), un rouleau postérieur (30) disposé à proximité de la cuve de mélange (5), et une bande transporteuse (31) enroulée autour desdits rouleaux (29 et 30).

De préférence, le rouleau postérieur (30) est monté sur un axe de rotation postérieur (32) fixe par rapport au bras de chargement (15). De préférence, cet axe de rotation postérieur (32) est confondu avec le premier axe transversal (16) portant le bras de chargement (15) sur le châssis (1). Cette caractéristique permet au rouleau postérieur (30) de conserver une position identique par rapport à la cuve de mélange (5), quelle que soit la position verticale du bras de chargement (15) par rapport au châssis (1). L'éloignement, notamment dans le sens de la hauteur, du rouleau postérieur (30) par rapport au bord supérieur (17) de la paroi avant (8) de la cuve de mélange (5), demeure constant, ce qui améliore la distribution des produits de la bande transporteuse (31) en mouvement vers la cuve de mélange (5).

La bande transporteuse (31) comporte un brin supérieur (33) sur lequel reposent les produits, ces derniers sont canalisés entre ledit brin supérieur (33) de la bande (31), la paroi supérieure (19) et les parois gauche et droite (20 et 21) du bras de chargement (15). La bande transporteuse (31) est réalisée en matière souple, par exemple en caoutchouc, et comporte des barrettes transversales pour l'entraînement des produits. La bande transporteuse (31) est mise en mouvement au moyen d'un moteur, par exemple un moteur hydraulique. De préférence, ce moteur agit sur le rouleau postérieur (30). Cette disposition permet au brin supérieur (33) de la bande transporteuse (31) d'être tiré par le rouleau postérieur (30) et contribue donc au maintien d'une bonne tension de la bande (31).

Il peut en sus être prévu que l'axe de rotation dudit moteur soit confondu avec l'axe de rotation postérieur (32) du rouleau postérieur (30). Cette caractéristique supprime l'emploi d'un moyen de transmission par engrènement ou friction - chaîne, pignons, courroie ou autre - entre le moteur et le rouleau postérieur (30). Cet agencement combine simplicité, économie et maintenance réduite.

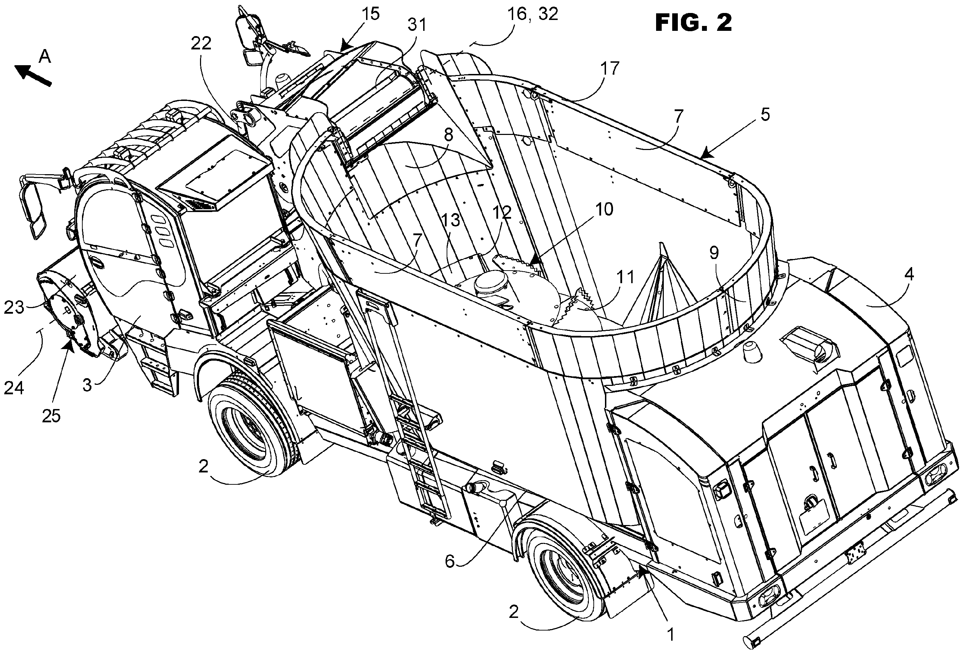

Le bras de chargement (15) peut être déplacé autour du premier axe transversal (16) de liaison au châssis (1) entre une première position dans laquelle la fraise de chargement (25) est fortement rapprochée du sol (voir figure 1) et une position médiane dans laquelle le bras de chargement (15) et la bande transporteuse (31) s'étendent sensiblement à l'horizontale. De préférence, le bras de chargement (15) peut en sus être déplacé vers une position fortement relevée (voir figure 2) dans laquelle la fraise de chargement (25) est placée à une hauteur du sol plus importante que le bord supérieur (17) de la paroi avant (8) de la cuve de mélange (5). Les positions du bras de chargement (15) comprises entre la première position et la position médiane sont des positions dans lesquelles le rouleau antérieur (29) est placé plus bas que le rouleau postérieur (30). De telles positions sont notamment utilisées pour le chargement des produits. Le bras de chargement (15) peut donc être déplacé dans au moins une position de chargement des produits dans laquelle le rouleau antérieur (29) est placé plus bas que le rouleau postérieur (30). De telles positions comprises entre la première position et la position médiane peuvent aussi être employées pour le transport, avec la fraise de chargement (25) inactive.

Le bras de chargement (15) porte également un dispositif de tension (34) de la bande transporteuse (31). L'invention est notamment caractérisée par le fait que le dispositif de tension (34) comporte au moins un vérin (35, 36) relié au rouleau antérieur (29) et au bras de chargement (15) de sorte que l'actionnement du vérin (35, 36) provoque un déplacement du rouleau antérieur (29) par rapport au bras de chargement (15). Le vérin (35, 36) autorise un réglage et un rattrapage automatiques de la tension de la bande transporteuse (31) pendant le fonctionnement de la machine. Aucun réglage de la tension de la bande transporteuse (31) par l'utilisateur n'est requis. L'effort de tension exercé par le vérin (35, 36) est orienté du rouleau postérieur (30) vers le rouleau antérieur (29). Ainsi, la masse des produits déplacés ne vient pas réduire la tension de la bande transporteuse (31) dont les risques de glissement sur ses rouleaux (29 et 30) sont dès lors fortement réduits. Le débit de chantier et la longévité de la machine s'en trouvent améliorés. Selon l'exemple de réalisation des figures, le vérin (35, 36) est un vérin hydraulique, mais il pourrait aussi être un vérin pneumatique ou électrique.

Le vérin (35, 36) est articulé au bras de chargement (15) et à un dispositif de liaison (37) du rouleau antérieur (29) au bras de chargement (15).

Dans l'exemple de réalisation des figures, le dispositif de liaison (37) comporte un premier levier (38) portant un axe de rotation antérieur (39) du rouleau antérieur (29). Ce premier levier (38) est relié à une paroi latérale, telle que la paroi gauche (20) du bras de chargement (15), au moyen d'une articulation (40) distante dudit axe de rotation antérieur (39). Cette articulation (40) est, par exemple, un axe. Elle est par exemple disposée sous l'axe de rotation antérieur (39). L'articulation du vérin (35) à cette paroi latérale gauche (20) du bras de chargement (15) est disposée, par exemple, quelque peu en arrière de l'axe de rotation antérieur (39) du rouleau antérieur (29).

De préférence, le dispositif de tension (34) comporte deux vérins (35 et 36). Le dispositif de liaison (37) comporte, en plus du premier levier (38), un deuxième levier (41). Les deux leviers (38 et 41) portent chacun l'axe de rotation antérieur (39) du rouleau antérieur (29). Chaque levier (38, 41) porte une extrémité dudit axe de rotation antérieur (39). Chaque levier (38, 41) respectif est relié à une paroi latérale respective du bras de chargement (15), en l'occurrence à la paroi gauche (20) respectivement la paroi droite (21), au moyen d'une articulation (40, 42) respective, telle qu'un axe, distante dudit axe de rotation antérieur (39). L'articulation (40 respectivement 42) de chaque levier (38 respectivement 41) au bras de chargement (15) est disposée, par exemple, sous l'axe de rotation antérieur (39). Le vérin (35) est articulé à la paroi gauche (20) et le vérin (36) est articulé à la paroi droite (21) du bras de chargement (15). Chaque vérin (35, 36) respectif est articulé à cette paroi latérale (20, 21) respective, par exemple, quelque peu en arrière de l'axe de rotation antérieur (39) du rouleau antérieur (29), et au levier (38, 41) correspondant. Grâce aux deux leviers (38 et 41) portant chacun une extrémité de l'axe de rotation antérieur (39), le rouleau antérieur (29) est particulièrement bien guidé par rapport au bras de chargement (15). Le rouleau antérieur (29) peut donc sans problème avoir une grande largeur. Ceci autorise l'emploi d'une bande transporteuse (31) de grande largeur permettant d'évacuer un débit important de produits de la fraise de chargement (25) vers la cuve de mélange (5).

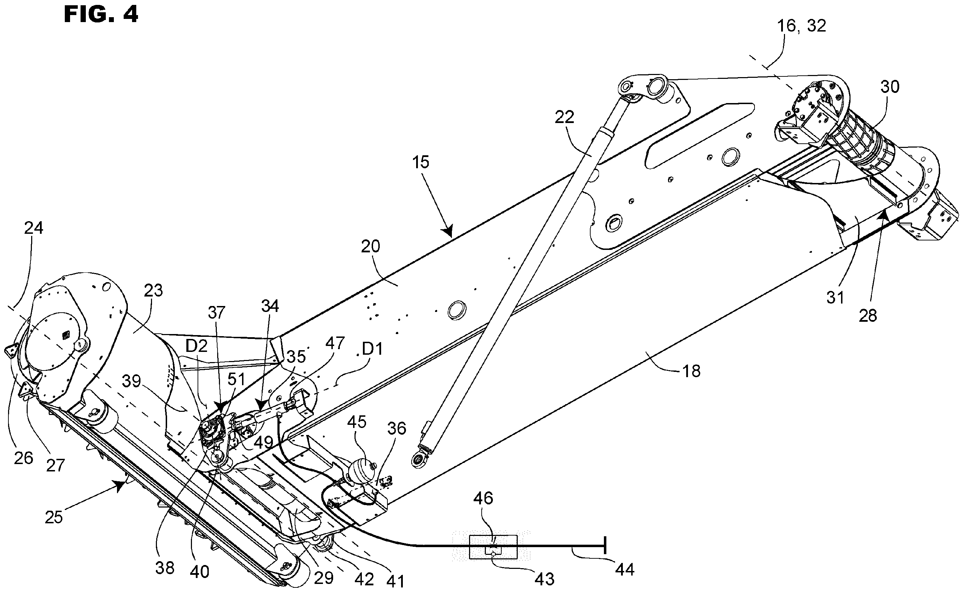

Selon une caractéristique avantageuse de l'invention, le au moins un vérin (35, 36) est un vérin simple effet. Ledit au moins un vérin (35, 36) est alimenté par un circuit (44) dont une pression de fluide est inférieure à une pression de tarage de l'accumulateur (45). Ce circuit (44) peut être une dérivation d'un autre circuit alimentant le moteur hydraulique de la fraise de chargement (25). Sur la figure 4, ces différents composants hydrauliques sont représentés de manière schématique. Le vérin (35, 36), notamment chaque vérin (35, 36), à simple effet, est mis sous pression pour être allongé. Lorsque le circuit (44) est pressurisé, un fluide d'alimentation vient remplir le vérin (35, 36), notamment chaque vérin (35, 36), de manière à tendre la bande transporteuse (31). La bande transporteuse (31) est donc tendue dès l'instant où la pression dans le circuit (44) est établie. Le choix d'une pression d'alimentation, appropriée au sein du circuit (44), et un dimensionnement, adéquat et aisé du ou des vérins (35 et 36), garantissent que l'effort développé par le ou les vérins (35, 36) est optimal pour assurer l'adhérence de la bande (31) sur ses rouleaux (29 et 30), sans tension excessive, dans les différentes conditions de fonctionnement du dispositif de déplacement (28). L'accumulateur (45) est taré à une pression légèrement supérieure à celle à laquelle le circuit (44) est maintenu. Par exemple, l'accumulateur (45) est taré à 25 bar tandis que le circuit (44) est maintenu à une pression voisine de 22 bar. Pendant le fonctionnement de la machine, la chambre du vérin (35, 36), notamment de chaque vérin (35, 36), reliée au circuit (44), se trouve normalement pressurisée à la valeur de pression du fluide régnant dans le circuit (44). L'accumulateur (45) n'est pas sollicité. En cas de surcharge sur la bande transporteuse (31) tendant à en augmenter la tension, ou en cas d'à-coups subis par la bande transporteuse (31), le rouleau antérieur (29) exerce un effort sur le ou les vérins (35, 36) tendant à augmenter la pression de fluide au sein de la chambre du ou des vérins (35, 36). La pression dans cette chambre augmente jusqu'à atteindre la pression de tarage de l'accumulateur (45) alors sollicité. L'accumulateur (45), dont est pourvue l'invention, constitue ainsi un moyen technique simple et peu onéreux pour limiter les surcharges et amortir les à-coups sur la bande transporteuse (31), ainsi que sur les rouleaux antérieur et postérieur (29 et 30) et leurs moyens de montage en rotation sur le bras de chargement (15). L'accumulateur (45) encaisse les variations de longueur du vérin (35, 36), notamment de chaque vérin (35, 36), et lui permet de reprendre sa position initiale une fois la surcharge évacuée.

Selon une autre caractéristique avantageuse de l'invention, le vérin (35, 36), notamment chaque vérin (35, 36), est relié à un clapet (43) alimenté par le circuit (44). L'accumulateur (45) est disposé entre le clapet (43) et le ou les vérins (35, 36). Il est par exemple prévu un seul accumulateur (45) pour les deux vérins (35 et 36). Le clapet (43) peut s'ouvrir pour laisser passer du fluide du circuit (44) vers le ou les vérins (35, 36), et se fermer lorsque le fluide circule en sens contraire. Le clapet (43) est, par exemple, un clapet à bille. Lorsque le circuit (44) est pressurisé, le fluide vient ouvrir le clapet à bille (43) et remplir le ou les vérins (35, 36). Lorsque la pression du fluide augmente dans l'accumulateur (45) pour atteindre la pression de tarage de ce dernier, notamment du fait d'une augmentation de pression dans la chambre du ou de chaque vérin (35, 36) par suite d'une surcharge sur la bande transporteuse (31), le clapet (43) se ferme, ce qui isole l'accumulateur (45) du circuit (44). Grâce à cet agencement, le ou les vérins (35, 36) peuvent librement varier en longueur dans un sens, à savoir s'allonger, afin de rattraper un allongement de la bande transporteuse (31), tandis qu'en cas de surcharge sur la bande transporteuse (31), due par exemple au passage d'un paquet important de produits, le circuit (44) se retrouve isolé de l'accumulateur (45) par le clapet (43). L'accumulateur (45) joue alors son rôle de réservoir de pression pour, à lui seul et de manière autonome, maintenir la bande transporteuse (31) sous tension tout en autorisant une variation de longueur du ou des vérins (35, 36) dans l'autre sens, à savoir un raccourcissement, évitant ainsi une sollicitation excessive de la bande transporteuse.

Le circuit (44) est de préférence un circuit à pression constante, par exemple 22 bar. Ainsi, l'effort développé, par le ou les vérins (35, 36) sur le ou les leviers (38, 41) correspondants, est constant quel que soit l'allongement du ou des vérins (35, 36). Lorsque l'alimentation en fluide du circuit (44) est interrompue, le clapet (43) se referme et empêche le fluide de ressortir du ou des vérins (35 et 36). De cette manière, la bande transporteuse (31) peut rester tendue lorsque la machine ou la fraise de chargement (25) est arrêtée. Ainsi, le clapet (43) a notamment pour fonction de permettre, lors dudit arrêt de la machine ou de la fraise de chargement (25), à la bande transporteuse (31) de rester en place sur les rouleaux antérieur et postérieur (29 et 30), notamment de conserver une position sensiblement centrée sur lesdits rouleaux (29 et 30). Le clapet (43) évite donc, lors d'un redémarrage ultérieur de la machine ou de la bande transporteuse (31), que la bande transporteuse (31) ne se mette en travers sur les rouleaux antérieur et postérieur (29 et 30).

De préférence, le clapet (43) est monté en parallèle avec un robinet (46). Ce robinet (46) est de préférence relié à la bâche de la centrale hydraulique alimentant notamment le circuit (44). Lorsque la machine ou la fraise de chargement (25) est arrêtée de sorte que le circuit (44) ne soit plus sous pression, l'ouverture de ce robinet (46) permet, par retour du fluide à la bâche, de faire chuter la pression dans le ou les vérins (35 et 36) et de détendre la bande transporteuse (31).

Le vérin (35 respectivement 36) est articulé au bras de chargement (15) en une première articulation (47 respectivement 48) et au levier (38 respectivement 41) correspondant en une deuxième articulation (49 respectivement 50). Le levier (38 respectivement 41) porte l'axe de rotation antérieur (39) du rouleau antérieur (29) au moyen d'un palier (51 respectivement 52). De préférence, une droite (D1) passant par la première articulation (47 respectivement 48) et par la deuxième articulation (49 respectivement 50), est sensiblement perpendiculaire à une autre droite (D2) passant par le centre de rotation dudit palier (51 respectivement 52) et par l'articulation (40 respectivement 42) dudit levier (38 respectivement 41) au bras de chargement (15). Cette caractéristique permet, avec la pression constante régnant dans le circuit (44), de garantir que le bras de levier développé par le vérin (35, 36), notamment par chaque vérin (35, 36), sur l'axe de rotation antérieur (39), demeure sensiblement constant lorsque le levier (38, 41) correspondant pivote autour de son articulation (40, 42) au bras de chargement (15). Par suite, la tension de la bande transporteuse (31) demeure sensiblement constante. Il en résulte une adhérence sensiblement constante de la bande transporteuse (31) sur le rouleau postérieur (30) qui en assure l'entraînement. La vitesse de déplacement de la bande transporteuse (31) est donc régulière. En sus, une usure prématurée de la bande transporteuse (31) par glissement sur ses rouleaux (29 et 30) est minimisée.

Bien entendu, l'invention n'est pas limitée à l'exemple de réalisation décrit et représenté sur les figures annexées. Des modifications restent possibles, notamment du point de vue de la constitution, de la disposition ou du nombre des divers éléments, par combinaison différente des caractéristiques susvisées, ou par substitution d'équivalents techniques, sans sortir pour autant du domaine de protection de l'invention.

## Revendications

1. Mélangeuse agricole comportant notamment une cuve de mélange (5) et un bras de chargement (15), le bras de chargement (15) portant une fraise de chargement (25) de produits et un dispositif de déplacement (28) des produits en direction de la cuve de mélange (5), le dispositif de déplacement (28) comportant un rouleau antérieur (29) disposé en aval et à proximité de la fraise de chargement (25), un rouleau postérieur (30) disposé à proximité de la cuve de mélange (5) et une bande transporteuse (31) enroulée autour desdits rouleaux (29 et 30), le bras de chargement (15) portant également un dispositif de tension (34) de la bande transporteuse (31), ***caractérisée en ce que*** le dispositif de tension (34) comporte au moins un vérin (35, 36) relié au rouleau antérieur (29) et au bras de chargement (15) de sorte que l'actionnement du vérin (35, 36) provoque un déplacement du rouleau antérieur (29) par rapport au bras de chargement (15), et que le au moins un vérin (35, 36) est relié à un accumulateur (45).

2. Mélangeuse selon la revendication 1, ***caractérisée en ce que*** la bande transporteuse (31) est mise en mouvement au moyen d'un moteur agissant sur le rouleau postérieur (30).

3. Mélangeuse selon la revendication 1 ou 2, ***caractérisée en ce que*** le rouleau postérieur (30) est monté sur un axe de rotation postérieur (32) fixe par rapport au bras de chargement (15).

4. Mélangeuse selon la revendication 1 ou 2, ***caractérisée en ce que*** le rouleau postérieur (30) est monté sur un axe de rotation postérieur (32) confondu avec un premier axe transversal (16) au moyen duquel le bras de chargement (15) est articulé au châssis (1).

5. Mélangeuse selon la revendication 2 et la revendication 3 ou 4, ***caractérisée en ce que*** l'axe de rotation du moteur est confondu avec l'axe de rotation postérieur (32) du rouleau postérieur (30).

6. Mélangeuse selon l'une quelconque des revendications 1 à 5, ***caractérisée en ce que*** le vérin (35, 36) est articulé au bras de chargement (15) et à un dispositif de liaison (37) du rouleau antérieur (29) au bras de chargement (15).

7. Mélangeuse selon la revendication 6, ***caractérisée en ce que*** le dispositif de liaison (37) comporte un levier (38, 41) portant un axe de rotation antérieur (39) du rouleau antérieur (29) et relié à une paroi latérale (20, 21) du bras de chargement (15) au moyen d'une articulation (40, 42) distante dudit axe de rotation antérieur (39).

8. Mélangeuse selon la revendication 7, ***caractérisée en ce que*** le dispositif de tension (34) comporte deux vérins (35 et 36), que le dispositif de liaison (37) comporte deux leviers (38 et 41) portant chacun l'axe de rotation antérieur (39) du rouleau antérieur (29), que chaque levier (38, 41) respectif est relié à une paroi latérale (20, 21) respective du bras de chargement (15) au moyen d'une articulation (40, 42) respective distante dudit axe de rotation antérieur (39), et que chaque vérin (35, 36) respectif est articulé à cette paroi latérale (20, 21) respective et au levier (38, 41) correspondant.

9. Mélangeuse selon l'une quelconque des revendications 1 à 8, ***caractérisée en ce que*** le au moins un vérin (35, 36) est un vérin simple effet alimenté par un circuit (44) dont une pression de fluide est inférieure à une pression de tarage de l'accumulateur (45).

10. Mélangeuse selon la revendication 9, ***caractérisée en ce que*** le au moins un vérin (35, 36) est relié à un clapet (43) alimenté par le circuit (44), et que le clapet (43) se ferme pour isoler l'accumulateur (45) du circuit (44) lorsqu'une pression de fluide dans l'accumulateur (45) augmente pour atteindre la pression de tarage.

11. Mélangeuse selon la revendication 9 ou 10, ***caractérisée en ce que*** le circuit (44) est un circuit à pression constante.

12. Mélangeuse selon la revendication 10, ***caractérisée en ce que*** le clapet (43) est monté en parallèle avec un robinet (46).

13. Mélangeuse selon l'une quelconque des revendications 1 à 12, ***caractérisée en ce que*** le au moins un vérin (35, 36) est articulé au bras de chargement (15) en une première articulation (47, 48) et au levier (38, 41) correspondant en une deuxième articulation (49, 50), que le levier (38, 41) porte l'axe de rotation antérieur (39) du rouleau antérieur (29) au moyen d'un palier (51, 52), et qu'une droite (D1) passant par lesdites première et deuxième articulations (47 et 49, 48 et 50) est sensiblement perpendiculaire à une autre droite (D2) passant par un centre de rotation dudit palier (51, 52) et par l'articulation (40, 42) dudit levier (38, 41) au bras de chargement (15).

## Patentansprüche

1. Landwirtschaftlicher Mischwagen, insbesondere mit einem Mischbehälter (5) und einem Ladearm (15), wobei der Ladearm (15) eine Ladefräse (25) für Produkte und eine Fördervorrichtung (28) zur Beförderung der Produkte in Richtung Mischbehälter (5) trägt, wobei die Fördervorrichtung (28) eine vordere Walze (29), die nach und in der Nähe der Ladefräse (25) angeordnet ist, eine hintere Walze (30), die in der Nähe des Mischbehälters (5) angeordnet ist, und ein Förderband (31) umfasst, das um die Walzen (29 und 30) gewickelt ist, wobei der Ladearm (15) ebenfalls eine Spannvorrichtung (34) für das Förderband (31) trägt, ***dadurch gekennzeichnet, dass*** die Spannvorrichtung (34) mindestens einen Zylinder (35, 36) umfasst, der mit der vorderen Walze (29) und mit dem Ladearm (15) so verbunden ist, dass die Betätigung des Zylinders (35, 36) eine Verschiebung der hinteren Walze (29) in Bezug auf den Ladearm (15) bewirkt, und dass der mindestens eine Zylinder (35, 36) mit einem Speicher (45) verbunden ist.

2. Mischwagen nach Anspruch 1, ***dadurch gekennzeichnet, dass*** das Förderband (31) mittels eines Motors in Bewegung gesetzt wird, der auf die hintere Walze (30) wirkt.

3. Mischwagen nach Anspruch 1 oder 2, ***dadurch gekennzeichnet, dass*** die hintere Walze (30) auf einer hinteren Drehachse (32) befestigt ist, die in Bezug auf den Ladearm (15) festsitzend ist.

4. Mischwagen nach Anspruch 1 oder 2, ***dadurch gekennzeichnet, dass*** die hintere Walze (30) auf einer hinteren Drehachse (32) befestigt ist, die mit einer ersten Querachse (16) zusammenfällt, mittels derer der Ladearm (15) am Rahmen (1) angelenkt ist.

5. Mischwagen nach Anspruch 2 und Anspruch 3 oder 4, ***dadurch gekennzeichnet, dass*** die Drehachse des Motors mit der hinteren Drehachse (32) der hinteren Walze (30) zusammenfällt.

6. Mischwagen nach irgend einem der Ansprüche 1 bis 5, ***dadurch gekennzeichnet, dass*** der Zylinder (35, 36) am Ladearm (15) und an einer Verbindungsvorrichtung (37) der am Ladearm (15) angebrachten vorderen Walze (29) angelenkt ist.

7. Mischwagen nach Anspruch 6, ***dadurch gekennzeichnet, dass*** die Verbindungsvorrichtung (37) einen Hebel (38, 41) umfasst, der eine vordere Drehachse (39) der vorderen Walze (29) trägt und mit einer Seitenwand (20, 21) des Ladearms (15) mittels eines Gelenks (40, 42) verbunden ist, das von der vorderen Drehachse (39) beabstandet ist.

8. Mischwagen nach Anspruch 7, ***dadurch gekennzeichnet, dass*** die Spannvorrichtung (34) zwei Zylinder (35 und 36) umfasst, dass die Verbindungsvorrichtung (37) zwei Hebel (38 und 41) umfasst, die jeweils die vordere Drehachse (39) der vorderen Walze (29) tragen, dass jeder jeweilige Hebel (38, 41) mit einer jeweiligen Seitenwand (20, 21) des Ladearms (15) mittels eines jeweiligen Gelenks (40, 42) verbunden ist, das von der vorderen Drehachse (39) beabstandet ist, und dass jeder jeweilige Zylinder (35, 36) an dieser jeweiligen Seitenwand (20, 21) und am entsprechenden Hebel (38, 41) angelenkt ist.

9. Mischwagen nach irgend einem der Ansprüche 1 bis 8, ***dadurch gekennzeichnet, dass*** der mindestens eine Zylinder (35, 36) ein einfachwirkender Zylinder ist, der von einer Schaltung (44) versorgt wird, von der ein Fluiddruck niedriger ist als ein Einstelldruck des Speichers (45).

10. Mischwagen nach Anspruch 9, ***dadurch gekennzeichnet, dass*** der mindestens eine Zylinder (35, 36) mit einem Kugelventil (43) verbunden ist, das von der Schaltung (44) versorgt wird, und dass sich das Kugelventil (43) schließt, um den Speicher (45) von der Schaltung (44) zu trennen, wenn ein Fluiddruck im Speicher (45) ansteigt, um den Einstelldruck zu erreichen.

11. Mischwagen nach Anspruch 9 oder 10, ***dadurch gekennzeichnet, dass*** die Schaltung (44) eine Schaltung mit konstantem Druck ist.

12. Mischwagen nach Anspruch 10, ***dadurch gekennzeichnet, dass*** das Kugelventil (43) in Parallelschaltung mit einem Ventil (46) angebracht ist.

13. Mischwagen nach irgend einem der Ansprüche 1 bis 12, ***dadurch gekennzeichnet, dass*** der mindestens eine Zylinder (35, 36) am Ladearm (15) an einem ersten Anlenkungspunkt (47, 48) und am entsprechenden Hebel (38, 41) an einem zweiten Anlenkungspunkt (49, 50) angelenkt ist, dass der Hebel (38, 41) die vordere Drehachse (39) der vorderen Walze (29) mittels eines Lagers (51, 52) trägt, und dass eine Gerade (D1), die durch den ersten und den zweiten Anlenkungspunkt (47 und 49, 48 und 50) verläuft, im Wesentlichen senkrecht zu einer anderen Geraden (D2) steht, die durch einen Drehpunkt des Lagers (51, 52) und durch die Anlenkung (40, 42) des Hebels (38, 41) am Ladearm (15) verläuft.

## Claims

1. Agricultural mixer in particular including a mixing tank (5) and a loading arm (15), the loading arm (15) carrying a product loading auger (25) and a device (28) for conveying products towards the mixing tank (5), the conveying device (28) including a forth roller (29) positioned downstream and in the proximity of the loading auger (25), a hind roller (30) positioned in the proximity of the mixing tank (5) and a conveyor belt (31) wrapped around the said rollers (29 and 30), the loading arm (15) also carrying a device (34) for tensioning the conveyor belt (31), ***characterised in that*** the tensioning device (34) includes at least one jack (35, 36) connected to the forth roller (29) and to the loading arm (15) such that the activation of the jack (35, 36) causes the forth roller (29) to move relative to the loading arm (15) and such that the at least one jack (35, 36) is connected to an accumulator (45).

2. Mixer according to claim 1, ***characterised in that*** the conveyor belt (31) is driven by means of an engine acting on the hind roller (30).

3. Mixer according to claim 1 or 2, ***characterised in that*** the hind roller (30) is mounted on a hind rotation axis (32) that is stationary relative to the loading arm (15).

4. Mixer according to claim 1 or 2, ***characterised in that*** the hind roller (30) is mounted on a hind rotation axis (32) that is coincident with a first transverse axis (16) by means of which the loading arm (15) is articulated to the chassis (1).

5. Mixer according to claim 2 and claim 3 or 4, ***characterised in that*** the rotation axis of the engine is coincident with the hind rotation axis (32) of the hind roller (30).

6. Mixer according to any one of the claims 1 to 5, ***characterised in that*** the jack (35, 36) is articulated to the loading arm (15) and to a device (37) connecting the forth roller (29) to the loading arm (15).

7. Mixer according to claim 6, ***characterised in that*** the connecting device (37) includes a lever (38, 41) supporting a forth rotation axis (39) of the forth roller (29) and connected to a side wall (20, 21) of the loading arm (15) by means of an articulation (40, 42) distant from the said forth rotation axis (39).

8. Mixer according to claim 7, ***characterised in that*** the tensioning device (34) includes two jacks (35 and 36), that the connecting device (37) includes two levers (38 and 41) each supporting the forth rotation axis (39) of the forth roller (29), that each respective lever (38, 41) is connected to a respective side wall (20, 21) of the loading arm (15) by means of a respective articulation (40, 42) distant from the said forth rotation axis (39) and that each respective jack (35, 36) is articulated to this respective side wall (20, 21) and to the corresponding lever (38, 41).

9. Mixer according to any one of the claims 1 to 8, ***characterised in that*** the at least one jack (35, 36) is a single-acting jack powered by a circuit (44) whose fluid pressure is lower than a set pressure of the accumulator (45).

10. Mixer according to claim 9, ***characterised in that*** the at least one jack (35, 36) is connected to a flap (43) powered by the circuit (44) and that the flap (43) closes to isolate the accumulator (45) from the circuit (44) when the fluid pressure in the accumulator (45) increases and reaches the set pressure.

11. Mixer according to claim 9 or 10, ***characterised in that*** the circuit (44) is a constant-pressure circuit.

12. Mixer according to claim 10, ***characterised in that*** the flap (43) is mounted parallel with a cock (46).

13. Mixer according to any one of the claims 1 to 12, ***characterised in that*** the at least one jack (35, 36) is articulated to the loading arm (15) in a first articulation (47, 48) and to the corresponding lever (38, 41) in a second articulation (49, 50), that the lever (38, 41) supports the forth rotation axis (39) of the forth roller (29) by means of a bearing (51, 52) and that a line (D1) passing through the said first and second articulations (47 and 49, 48 and 50) is substantially perpendicular to another line (D2) passing through a centre of rotation of the said bearing (51, 52) and through the articulation (40, 42) of the said lever (38, 41) to the loading arm (15).
